# EUROPEAN PATENT APPLICATION

(11) **EP 4 715 660 A1**
(43) Date of publication of application: **25.03.2026**
(21) Application number: 24942085.2
(22) Date of filing: 24.07.2024
(51) Int. Cl.: G06F 40/137

(54) **LONG-TEXT GENERATION METHOD AND APPARATUS, AND DEVICE, STORAGE MEDIUM AND COMPUTER PROGRAM PRODUCT**

(30) Priority: 18.06.2024 CN 202410788709
(71) Applicant: Beijing Baidu Netcom Science Technology Co., Ltd., Beijing 100085 (CN)
(72) Inventor: PANG, Hailong, Beijing 100085 (CN); WU, Guangfa, Beijing 100085 (CN); ZHANG, Chao, Beijing 100085 (CN); CHEN, Tianzeng, Beijing 100085 (CN); XUE, Luying, Beijing 100085 (CN); BAI, Yunlong, Beijing 100085 (CN)
(74) Representative: Richly & Ritschel Patentanwälte PartG mbB
(86) International application number: PCT/CN2024/107321
(87) International publication number: WO 2025/260445

(57) **Abstract**

The present disclosure provides a method and apparatus for generating a long text, an electronic device, a computer readable storage medium, and a computer program product, relates to the field of big data processing technology, particularly to the field of intelligent office technology. An embodiment of the method includes: generating a long text outline based on long text requirement information, the long text outline including a chapter entry; generating, in response to receiving file data associated with the chapter entry, a text fragment corresponding to the chapter entry based on the file data; and generating the long text based on the long text outline and the text fragment corresponding to the chapter entry.

## Description

### CROSS-REFERENCE TO RELATED APPLICATIONS

This application claims priority to Chinese Patent Application No. 202410788709.6, titled "METHOD AND APPARATUS FOR GENERATING LONG TEXT, DEVICE, STORAGE MEDIUM, AND COMPUTER PROGRAM PRODUCT", filed with the China National Intellectual Property Administration (CNIPA) on June 18, 2024, the contents of which are incorporated herein by reference in their entirety.

### TECHNICAL FIELD

The present disclosure relates to the field of big data processing technology, particularly to the field of intelligent office technology, more particularly, to a method and apparatus for generating a long text, an electronic device, a computer readable storage medium, and a computer program product.

### BACKGROUND

In the field of text generation, generating a long text that meets user needs based on retrieved materials typically involves certain operational and technical requirements, and usually requires users to possess a certain level of specialized skills and invest significant time.

### SUMMARY

Embodiments of the present disclosure provides a method and apparatus for generating a long text, an electronic device, a computer readable storage medium, and a computer program product, enabling the flexible, efficient, and convenient generation of long texts that meet users' personalized and customized needs.

In one or more embodiments, a method for generating a long text is proposed, including: generating a long text outline based on long text requirement information, the long text outline including a chapter entry; generating, in response to receiving file data associated with the chapter entry, a text fragment corresponding to the chapter entry based on the file data; and generating the long text based on the long text outline and the text fragment corresponding to the chapter entry.

In one or more embodiments, an apparatus for generating a long text is proposed, including: an outline generation unit, configured to generate a long text outline based on long text requirement information, the long text outline including a chapter entry; a text fragment generation unit, configured to generate, in response to receiving file data associated with the chapter entry, a text fragment corresponding to the chapter entry based on the file data; and a long text generation unit, configured to generate the long text based on the long text outline and the text fragment corresponding to the chapter entry.

In one or more embodiments, an electronic device is provided, including: at least one processor; and a memory, communicatively connected to the at least one processor; where, the memory stores instructions executable by the at least one processor, and the instructions, when executed by the at least one processor, cause the at least one processor to perform the method for generating long text as described in any one of the implementations in the first aspect.

In one or more embodiments, a non-transitory computer readable storage medium storing computer instructions is provided, where, the computer instructions are used to cause the computer to perform the method for generating a long text as described in any one of the implementations in the first aspect.

In one or more embodiments, a computer program product including a computer program is provided, where the computer program, when executed by a processor, can implement steps of the method for generating a long text as described in any one of the implementations in the first aspect.

It should be understood that contents described in this section are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

By reading the detailed description of non-limiting embodiments with reference to the following accompanying drawings, other features, objects and advantages of the present disclosure will become more apparent.
Fig. 1 is an exemplary system architecture diagram to which embodiments of the present disclosure may be applied;
Fig. 2 is a flowchart of a method for generating a long text provided in an embodiment of the present disclosure;
Fig. 3 is a flowchart of another method for generating a long text provided in an embodiment of the present disclosure;
Fig. 4 is a flowchart of an application scenario of the method for generating a long text provided in an embodiment of the present disclosure;
Fig. 5A and Fig. 5B are user interface diagrams of an application scenario of the method for generating a long text provided in an embodiment of the present disclosure;
Fig. 6 is a structural block diagram of an apparatus for generating a long text provided in an embodiment of the present disclosure; and
Fig. 7 is a schematic structural diagram of an electronic device suitable for performing the method for generating a long text provided in an embodiment of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications may be made to the embodiments described here without departing from the scope and spirit of the present disclosure. Similarly, for clearness and conciseness, descriptions of well-known functions and structures are omitted in the following description. It should be noted that the embodiments in the present disclosure and the features in the embodiments may be combined with each other on a non-conflict basis.

In the technical solution of the present disclosure, the processing of users' personal information involved, including collection, storage, use, processing, transmission, provision, and disclosure, complies with the provisions of relevant laws and regulations and does not violate public order and good morals.

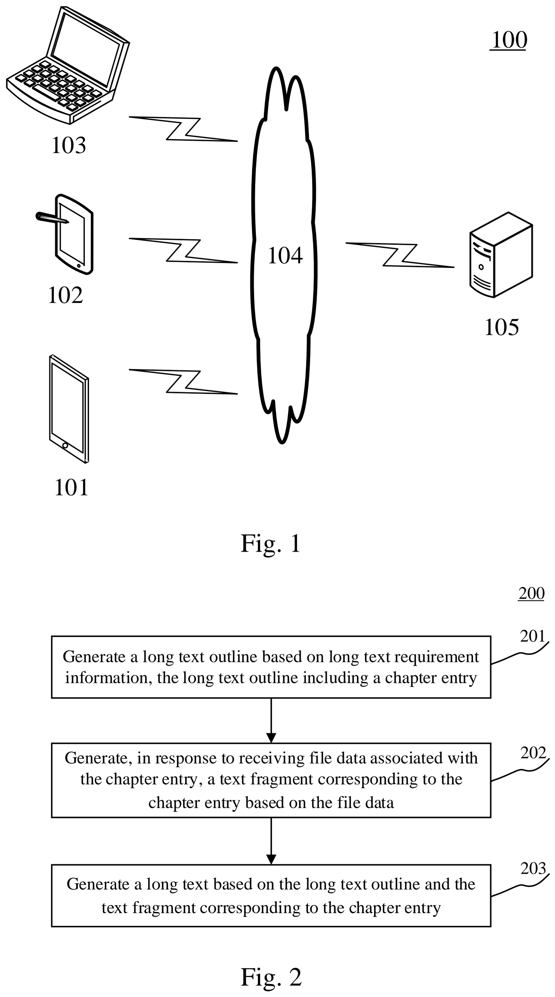

Fig. 1 illustrates an exemplary system architecture 100 to which embodiments of a method and apparatus for generating a long text, an electronic device, a computer readable storage medium, and a computer program product of the present disclosure may be applied.

As shown in Fig. 1, the system architecture 100 may include terminal device(s) 101, 102, 103, a network 104 and a server 105. The network 104 serves as a medium for providing a communication link between the terminal device(s) 101, 102, 103 and the server 105. The network 104 may include various types of connections, such as wired or wireless communication links, or optical fiber cables.

Users may use the terminal device(s) 101, 102, 103 to interact with the server 105 through the network 104 to receive or send messages, etc. Various applications, such as long text generation applications, may be installed on the terminal device(s) 101, 102, 103 and the server 105, for implementing information communication between the two.

The terminal device(s) 101, 102, 103 and the server 105 may be hardware or software. When the terminal device(s) 101, 102, 103 is/are hardware, the terminal device(s) 101, 102, 103 may be various electronic devices having a display screen, including but not limited to, a smart phone, a tablet computer, a laptop portable computer and a desktop computer, or the like; and when the terminal device(s) 101, 102, 103 is/are software, the terminal device(s) 101, 102, 103 may be installed in the electronic device(s) listed above, and may be implemented as multiple software pieces or software modules, or as a single software piece or software module, which is not limited herein. When the server 105 is hardware, the server 105 may be implemented as a distributed server cluster composed of multiple servers, or as a single server; and when the server is software, the server may be implemented as multiple software pieces or software modules, or as a single software piece or software module, which is not limited herein.

The server 105 may provide various services through various built-in applications, for example, a long text generation application that may provide a long text generation service to users. The server 105 may achieve the following effects when running the long text generation application: an outline generation unit generates a long text outline based on long text requirement information, the long text outline including a chapter entry, a text fragment generation unit generates, in response to receiving file data associated with the chapter entry, a text fragment corresponding to the chapter entry based on the file data, and a long text generation unit generates the long text based on the long text outline and the text fragment corresponding to the chapter entry.

Here, a user may input or upload the long text requirement information through the terminal device(s), and then send the long text requirement information to the server 105 via the network 104. After generating the long text outline, the server 105 may return the long text outline to the terminal device(s) via the network 104 for presentation to the user. The user may further input or upload the file data associated with a chapter entry through the terminal device(s), and then send the file data to the server 105 via the network 104. After generating the long text, the server 105 may return the long text to the terminal device(s) via the network 104 for presentation to the user.

It should be understood that the numbers of the terminal devices, the networks and the servers in Fig. 1 are merely illustrative. Any number of terminal devices, networks and servers may be provided depending on implementation requirements. In embodiments of the present disclosure, "long text" may refer to any text data of considerable length containing substantial textual content, such as text data exceeding 512 characters in text length.

Referring to Fig. 2, Fig. 2 is a flowchart of a method for generating a long text provided in an embodiment of the present disclosure, where the flow 200 includes the following steps.

Step 201: generating a long text outline based on long text requirement information, the long text outline including a chapter entry;

This step aims to enable an executing body (for example, the server 105 shown in Fig. 1) of the method for generating a long text to generate a corresponding long text outline based on the long text requirement information, where the long text outline includes chapter entries. Embodiments of the present disclosure do not limit the implementation of generating a corresponding long text outline based on the long text requirement information. For example, the long text outline may be generated using a historically generated outline based on the long text requirement information, or the long text outline may be generated using a preset outline template based on the long text requirement information.

Here, the long text requirement information refers to information related to a long text that is to be generated, and may include long text topic information and/or a reference file. Embodiments of the present disclosure do not limit the form of the long text requirement information. For example, a user may input the long text topic information through a terminal device shown in Fig. 1, and the server 105 may generate a corresponding long text outline based on the long text topic information input by the user and present the generated long text outline to the user via a terminal device shown in Fig. 1. For another example, the user may upload a reference file through a terminal device shown in Fig. 1, and the server 105 may determine a topic of the reference file by analyzing the reference file based on the reference file uploaded by the user, generate a corresponding long text outline based on the topic of the reference file, and present the generated long text outline to the user via a terminal device shown in Fig. 1. For yet another example, the user may input the long text topic information and upload the reference file through a terminal device shown in Fig. 1, and the server 105 may generate a corresponding long text outline based on the long text topic information input by the user and the uploaded reference file, and present the generated long text outline to the user via a terminal device shown in Fig. 1. Embodiments of the present disclosure provide various forms of long text requirement information, which may offer greater flexibility for the generation of long texts.

Alternatively, after the long text outline is generated and presented to the user, the user may also replace the generated long text outline, so that the generated long text outline can better meet the user's own needs. Therefore, the method for generating a long text may further include: in response to receiving an outline replacement request, generating a new long text outline based on the long text requirement information, to update the long text outline. For example, the user may send the outline replacement request through a terminal device shown in Fig. 1, and the server 105 may generate the new long text outline based on the long text requirement information in response to the received outline replacement request, and present the generated new long text outline to the user via a terminal device shown in Fig. 1, thereby achieving replacement of the generated long text outline. Here, the new long text outline is different from the previously generated long text outline, for example, the number of chapters of the new long text outline is different from that of the previously generated long text outline, or titles of the chapters of the new long text outline are different from that of the previously generated long text outline, or the like, which is not limited in embodiments of the present disclosure.

Alternatively, after the long text outline is generated and presented to the user, in addition to replacing the entire long text outline, the user may also replace only part of the structure in the long text outline. For example, the long text outline further includes a text title, and the user may replace the text title in the long text outline. Therefore, the method for generating a long text may further include: in response to receiving a text title replacement request, generating a new text title based on the long text requirement information, to update the text title in the long text outline. For example, the user may send a text title replacement request through a terminal device shown in Fig. 1, and the server 105 may generate a new text title based on the long text requirement information in response to the received text title replacement request, and present the generated new text title to the user via a terminal device shown in Fig. 1, thereby achieving replacement of the text title in the long text outline. Here, the new text title is different from the previously generated text title. For example, the titles differ in scope, perspective, etc., which is not limited in embodiments of the present disclosure.

Alternatively, after the long text outline is generated and presented to the user, in addition to replacing the entire long text outline or part of the structure in the long text outline, the user may also only adjust a part of the structure in the long text outline. For example, the user may add or delete a chapter entry or chapter entries in the long text outline, or may downgrade or upgrade a chapter entry or chapter entries in the long text outline. For another example, the user may modify the text title in the long text outline or modify a chapter title of a chapter entry in the long text outline, which is not limited in embodiments of the present disclosure.

Step 202: generating, in response to receiving file data associated with the chapter entry, a text fragment corresponding to the chapter entry based on the file data.

On the basis of step 201, this step aims to enable the executing body to, in response to receiving the file data associated with a chapter entry, generate a text fragment corresponding to the chapter entry based on the file data, as the main text of the corresponding chapter. Embodiments of the present disclosure do not limit the implementation of generating a text fragment corresponding to a chapter entry based on the file data. For example, information retrieval may be performed based on the file data, and a text fragment corresponding to the chapter entry may be generated based on retrieved information and the file data; alternatively, key description information of the chapter entry may be generated based on the file data, then information retrieval may be performed based on the key description information, and a text fragment corresponding to the chapter entry may be generated based on the retrieved information and the file data.

Here, the file data refers to data related to the text fragment that is to be generated for the chapter entry, and may include a reference file and/or information associated with the chapter entry. Embodiments of the present disclosure do not limit the form of the file data. For example, a user may input, under a chapter entry, information associated with the chapter entry through a terminal device shown in Fig. 1, and the server 105 may generate a text fragment corresponding to the chapter entry based on the information associated with the chapter entry input by the user. For another example, the user may upload, under a chapter entry, a reference file through a terminal device shown in Fig. 1, and the server 105 may generate a text fragment corresponding to the chapter entry based on the reference file uploaded by the user. For yet another example, the user may input the information associated with a chapter entry and upload a reference file under the chapter entry through a terminal device shown in Fig. 1, and the server 105 may generate a text fragment corresponding to the chapter entry based on the information associated with the chapter entry input by the user and the uploaded reference file.

Alternatively, the generating a text fragment corresponding to the chapter entry based on the file data in step 202 may include the following steps: generating an outline framework based on the long text outline and the file data associated with the chapter entry, where the outline framework includes key description information of the chapter entry; and generating the text fragment corresponding to the chapter entry based on the file data and the key description information. For example, the key description information of a chapter entry may be generated based on the file data associated with the chapter entry using a preset professional knowledge base, and the outline framework may be formed based on the long text outline and the key description information, where the preset professional knowledge base may perfect the key description information of the chapter entry based on the file data. For example, information retrieval may be performed based on the key description information of a chapter entry, and a text fragment corresponding to the chapter entry may be generated based on the retrieved information and the file data of the chapter entry, where keywords and key points of the chapter entry may be determined using the key description information, to perform information retrieval using the keywords and the key points. By first generating the key description information of a chapter entry, then generating a text fragment corresponding to the chapter entry, the long text generation process is refined, which may improve the professionalism of the generated long text and make the long text more in line with the user's needs.

Alternatively, the file data may include one or more of: text data, image data, table data. Embodiments of the present disclosure do not limit types of the file data. Here, the text data is structured data, while the image data and the table data are unstructured data. In the process of generating a text fragment corresponding to the chapter entry, step 202 may further include: performing conversion between the structured data and the unstructured data, which may enrich the content of the long text and improve its readability.

For example, step 202 may further include the following steps: inserting the image data in the file data into the text fragment corresponding to the chapter entry; and/or inserting the table data in the file data into the text fragment corresponding to the chapter entry. Here, if the file data includes the image data, in the process of generating the text fragment corresponding to the chapter entry, the image data may be converted into structured data, then, an insertion position of the converted data may be determined based on the text fragment corresponding to the chapter entry, and the converted data is inserted at the determined position to present the image data. If the file data includes table data, in the process of generating the text fragment corresponding to the chapter entry, the table data may be converted into structured data, then, an insertion position of the converted data may be determined based on the text fragment corresponding to the chapter entry, and the converted data is inserted at the determined position to present the table data. Embodiments of the present disclosure do not limit the implementation of format conversion for the image data and the table data.

For another example, step 202 may further include the following steps: converting data description information that meets chart requirements in the text data into chart data and inserting the chart data into the text fragment corresponding to the chapter entry; and/or converting data description information that meets formula requirements in the text data into formula data and inserting the formula data into the text fragment corresponding to the chapter entry. Here, the chart data and the formula data are unstructured data. If the text data includes the data description information that meets the chart requirements, in the process of generating the text fragment corresponding to the chapter entry, the data description information meeting the chart requirements may be converted into chart data, then, an insertion position of the converted data may be determined based on the text fragment corresponding to the chapter entry, and the converted data is inserted at the determined position to be presented in the form of chart data, such as pie charts, bar charts, or line charts. If the text data includes the data description information that meets the formula requirements, in the process of generating the text fragment corresponding to the chapter entry, the data description information meeting the formula requirements may be converted into formula data, then, an insertion position of the converted data may be determined based on the text fragment corresponding to the chapter entry, and the converted data is inserted at the determined position to be presented in the form of formula data. Embodiments of the present disclosure do not limit the implementation of converting text data into chart data or formula data.

Step 203: generating the long text based on the long text outline and the text fragment corresponding to the chapter entry.

On the basis of step 202, this step aims to enable the executing body to combine the long text outline and the text fragment corresponding to the chapter entry to generate the long text that meets requirements, based on the long text outline and the text fragment corresponding to the chapter entry. Embodiments of the present disclosure do not limit the type of the long text. For example, the long text may be a paper, a teaching plan, a summary, or other long texts that meet different needs. For another example, after the server 105 generates the long text based on the long text outline and the text fragment corresponding to the chapter entry, the generated long text may be presented to the user via a terminal device shown in Fig. 1.

Alternatively, the method for generating a long text may further include the following steps: polishing the long text, so that the generated long text is more professional; and/or performing format adjustment on the long text, so that the generated long text better conforms to format requirements for the long text. For example, by polishing the generated long text, unnecessary logical words appearing in the long text (such as "first", "secondly", or "finally") may be removed, unnecessary duplicate content in the long text may be removed, and the content of the long text can be made more consistent with facts. Here, the format of the long text may be determined based on the type of the long text, and format adjustment on the long text may be determined based on the type of the long text, the generation method of the long text, etc., which is not limited in embodiments of the present disclosure. For example, by performing format adjustment on the generated long text, the chapter entry/entries in the long text outline may be revised into a standard chapter catalog, and references, statement, etc., may be added at the end of the long text.

Alternatively, the generating a text fragment corresponding to the chapter entry based on the file data in step 202, may include: generating, based on file data respectively associated with a plurality of chapter entries, text fragments respectively corresponding to the plurality of chapter entries, where at least one chapter entry of the chapter entries corresponds to at least two text fragments; the generating the long text based on the long text outline and the text fragment corresponding to the chapter entry in step 203, may include: generating at least two long texts based on the long text outline and the text fragments respectively corresponding to the plurality of chapter entries. The method for generating a long text may further include: evaluating the at least two long texts, and outputting the long text having the highest evaluation score based on evaluation scores of the long texts, so as to perform optimization-by-selection processing on the generated long text, thereby making the generated long text more professional. Embodiments of the present disclosure do not limit criteria of the evaluation. For example, the long text may be evaluated from dimensions such as professionalism and factual accuracy.

Alternatively, for one chapter entry, at least two corresponding text fragments may be generated based on parameters preset for generating text fragments of the chapter entry. For example, the preset parameters for generating text fragments may be diversity parameters such as synonyms or near-synonyms, or penalty parameters such as forbidden words. For example, for one chapter entry, a first corresponding text fragment may be generated based on synonyms, and a second corresponding text fragment may be generated based on near-synonyms. For another example, for one chapter entry, a first corresponding text fragment may be generated based on a part of the forbidden words, and a second corresponding text fragment may be generated based on another part of the forbidden words. Alternatively, for one chapter entry, at least two corresponding text fragments may be generated based on keywords of the chapter entry used for retrieval. For example, for one chapter entry, a first corresponding text fragment may be generated by performing retrieval based on a part of the keywords, and a second corresponding text fragment may be generated by performing retrieval based on another part of the keywords.

The method 200 for generating a long text provided by embodiments of the present disclosure, by generating the long text outline including a chapter entry based on the long text requirement information, in response to receiving the file data associated with the chapter entry, generating the text fragment corresponding to the chapter entry based on the file data, and generating the long text based on the long text outline and the text fragment corresponding to the chapter entry, can not only automatically generate a long text based on the long text requirement information provided by the user, but also allow the user to provide the file data under a chapter entry in the long text outline, and generate a unique and personalized professional long text based on the file data, endowing long text generation with great flexibility, which may meet the user's urgent demand for personalized and customized long text generation, and make the creation of long texts more efficient and convenient.

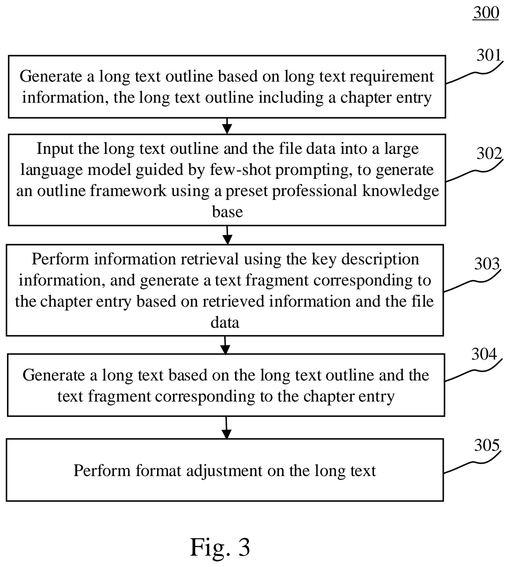

Referring to Fig. 3, Fig. 3 is a flowchart of another method for generating a long text provided in an embodiment of the present disclosure, that is, providing a detailed implementation for step 202 in the flow 200 shown in Fig. 2. Other steps in the flow 200 remain unchanged, and a new complete embodiment is also obtained by replacing step 202 with the detailed implementation provided in this embodiment. Here, a flow 300 includes the following steps.

Step 301: generating a long text outline based on long text requirement information, the long text outline including a chapter entry;
In some alternative embodiments, this step aims to enable an executing body (for example, the server 105 shown in Fig. 1) of the method for generating a long text to input the long text requirement information into a fine-tuned model, to generate the long text outline based on a historically generated outline using the fine-tuned model. If a user needs to replace the generated long text outline, a new long text outline may be generated using the historically generated outline through the fine-tuned model based on the generated long text outline. Here, the long text outline generated by using the fine-tuned model may meet preset requirements for generating long text outlines. For example, chapters of the generated outline are non-repetitive, description information under each chapter entry of the generated outline does not exceed 20 characters, and the generated outline needs to include a level-2 title and a level-3 title, etc. Alternatively, if the user needs to replace a text title in the generated long text outline, a new text title may also be generated using a historically generated text title through the fine-tuned model based on the text title in the generated long text outline.

Step 302: inputting the long text outline and the file data into a large language model guided by few-shot prompting, to generate an outline framework using a preset professional knowledge base;
On the basis of step 301, this step aims to enable the executing body to input the long text outline and the file data into the large language model guided by few-shot prompting, to generate an outline framework using the preset professional knowledge base. Here, before generating an outline framework each time, the large language model needs to be guided by few-shot prompting, so that the generated outline framework may strictly comply with the outline format. The file data may include information associated with a chapter entry that is edited and input by the user under the chapter entry of the long text outline, or a reference file uploaded by the user under the chapter entry of the long text outline, for example, a reference file in the format of Word, Pdf, Excel, or PNG. Compared with the description information under each chapter entry in the outline in step 301, key description information under each chapter entry in the outline framework provides a more detailed description of the chapter, and keywords and key points of the chapter may be determined based on the key description information.

Step 303: performing information retrieval using the key description information to obtain retrieved information, and generating a text fragment corresponding to the chapter entry based on the retrieved information and the file data.

In some alternative embodiments, on the basis of step 302, this step aims to enable the executing body to split the respective chapter entries in the outline framework, and input the file data and the key description information of the respective chapter entries obtained from splitting respectively into a large language model that has undergone supervised fine-tuning (SFT), then determine the keywords and the key points of a chapter entry using the key description information of the current chapter entry to perform information retrieval based on the keywords and the key points, and generate text fragment(s) corresponding to the current chapter entry based on retrieved information and the file data of the current chapter entry. Here, performing supervised fine-tuning on the large language model may ensure the effect of text fragment generation, so that the text fragment(s) corresponding to each chapter entry may meet preset requirements for generating text fragments. For example, the generated text fragment(s) is/are required to be limited to 1500 characters in length, and the generated text fragment(s) start from the current chapter entry without generating contents of other chapter entries.

The large language model after supervised fine-tuning also specifies insertion formats for data description information that meets chart requirements, data description information that meets formula requirements in image data, table data, or text data. For example, if a generated text fragment needs to refer to the image data included in the file data, the image data may be inserted in the following format: "Figure: XXX architecture diagram, ![Image description caption](Image url)--Image". If a generated text fragment needs to refer to the data description information that meets the chart requirements included in the text data, the data description information meeting the chart requirements may be converted to generate a corresponding json string: {"caption": "chart N Baidu's operating cash flow (100 million RMB) ", "columns": ["Time", "Year over Year (%)"], "data": [["2018FY", 0]]} for insertion. Insertion of the data description information that meets the formula requirements may refer to the insertion method of the data description information that meets the chart requirements, thus, detailed description thereof will be omitted.

Step 304: generating the long text based on the long text outline and the text fragment corresponding to the chapter entry.

On the basis of step 303, this step aims to enable the executing body to combine the long text outline and the text fragment corresponding to the chapter entry to generate the long text composed of a chapter catalog and chapter main texts. In some alternative embodiments, the executing body may also perform polishing and optimization-by-selection processing on the generated long text. For example, the long text may be input into the large language model for polishing. For example, the text fragments respectively corresponding to the plurality of chapter entries may be generated respectively based on the file data respectively associated with the plurality of chapter entries, and at least one chapter entry therein may correspond to at least two text fragments. Therefore, at least two long texts may be generated based on the long text outline and the text fragments respectively corresponding to the plurality of chapter entries, and the at least two long texts may be input into an optimization-by-selection model for evaluation. Based on evaluation scores of the long texts, the long text having the highest score may be output. Since the two long texts are generated by Artificial Intelligence (AI), the characteristics or style of AI-generated text, that is, "AI flavor", may be considered as an evaluation indicator in one dimension when evaluating these long texts. For example, an evaluation result may be output in the form of a json string, such as: {"Best long text": Long Text 1}.

Step 305: performing format adjustment on the long text.

In some alternative embodiments, on the basis of step 304, this step aims to enable the executing body to eliminate certain content generated by the large language model, such as: "(Note: The above content| (Note: Due to word count limitations | (Note: Due to | Due to the rigor of academic research); revise the chapter entries into a standard chapter catalog, for example, revising "## Introduction" to "Chapter 1 Introduction" and "### Research Purpose and Significance" to "1.1 Research Purpose and Significance"; and add references and statement at the end of the long text.

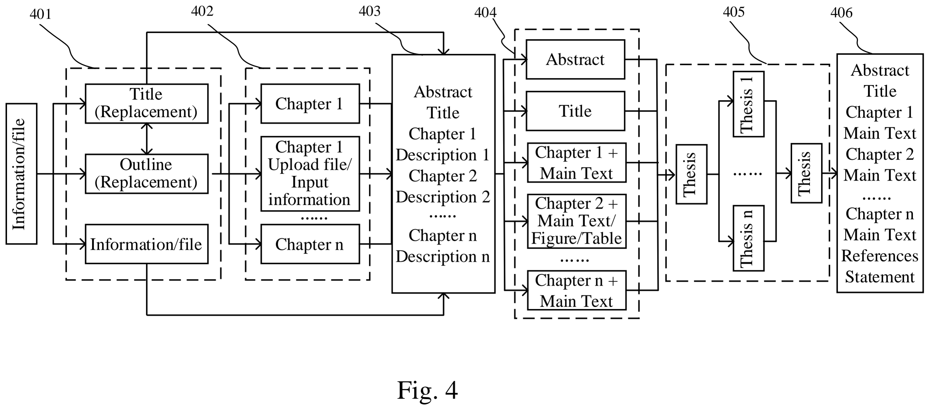

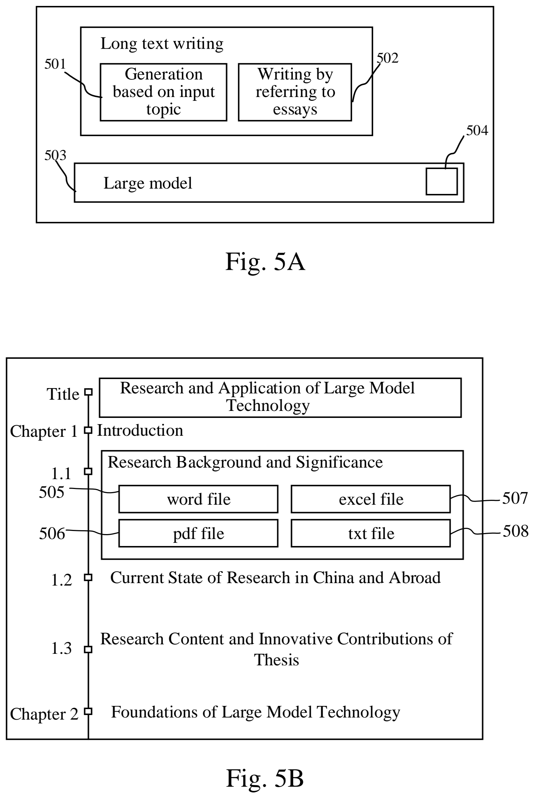

To enhance understanding, the present disclosure provides an implementation solution in conjunction with an application scenario. Referring to Fig. 4, Fig. 5A, and Fig. 5B, Fig. 4 is a flowchart of an application scenario of the method for generating a long text provided in an embodiment of the present disclosure. Fig. 5A and Fig. 5B are user interface diagrams of an application scenario of the method for generating a long text provided in an embodiment of the present disclosure.

Step 401: generating a long text outline based on long text requirement information, the long text outline including a text title and chapter entries. As shown in Fig. 5A, two modes for generating a long text based on long text requirement information are provided on a user interface of a terminal device. 501 at the left side is for generating a long text based on long text topic information input by the user, and 502 at the right side is for generating a long text based on a reference file uploaded by the user. When the mode for generating a long text based on the long text topic information input by the user is selected, and the long text topic information "large model" is entered in an input box 503 on the user interface, a button 504 is clicked to generate a long text outline, which is then presented to the user on the user interface of the terminal device. As shown in Fig. 5B, the user may replace or adjust the generated long text outline according to his/her own needs, such as replacing the text title or replacing the outline.

Step 402: the user may provide file data associated with a chapter entry under the chapter entry of the long text outline, where the file data may include the reference file uploaded by the user and/or information associated with the chapter entry input by the user. As shown in Fig. 5B, the user has uploaded four reference files under the chapter entry "1.1 Research Background and Significance" of the long text outline, i.e., a word file 505, a pdf file 506, an excel file 507, and a txt file 508. After the user uploads the reference files and/or inputs the information associated with a chapter entry under the chapter entry of the long text outline, steps 403-406 may be performed to generate a long text. For example, the long text may be directly generated by clicking the button to perform the above steps, and the generated long text may be presented to the user on the user interface of the terminal device.

Step 403: in response to receiving the file data associated with the chapter entry, generating an outline framework based on the long text outline and the file data associated with the chapter entry, where the outline framework includes key description information of the chapter entry; step 404: generating a text fragment corresponding to the chapter entry, based on the file data and the key description information, and generating the long text based on the long text outline and the text fragment corresponding to the chapter entry; step 405: performing polishing and/or optimization-by-selection processing on the long text; and step 406: performing format adjustment on the long text.

In the process of generating the long text, the excel file 507 may be converted into a json format and inserted into the text fragment corresponding to the chapter entry. Data description information meeting chart requirements in the word file 505 may be converted into chart data and inserted into the text fragment corresponding to the chapter entry. Format adjustment may be performed on the long text. For example, the long text in the json format may be mapped to a standard paper format, that is, including a chapter catalog and chapter main texts.

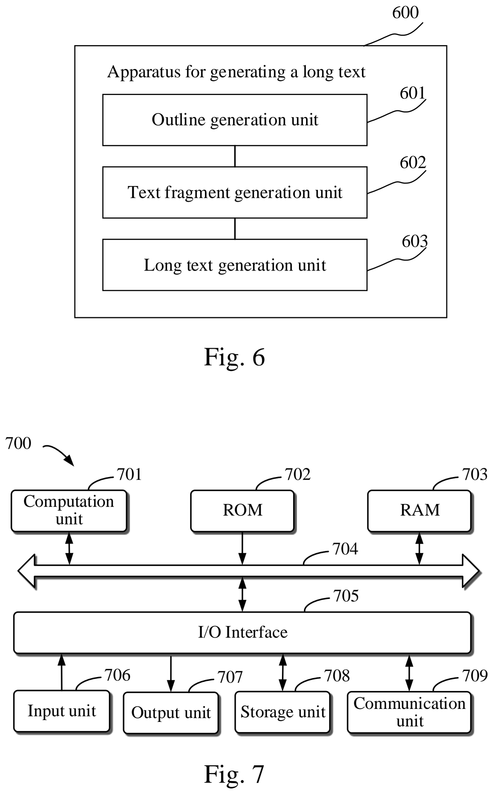

With further reference to Fig. 6, as an implementation of the method shown in the above figures, an embodiment of the present disclosure also provides an apparatus for generating a long text. The embodiment of the apparatus for generating a long text corresponds to the embodiment of the method for generating a long text shown in Fig. 2 to Fig. 5, and the apparatus may be applied in various electronic devices.

As shown in Fig. 6, the apparatus 600 for generating a long text in this embodiment may include: an outline generation unit 601, a text fragment generation unit 602, and a long text generation unit 603. The outline generation unit 601 is configured to generate a long text outline based on long text requirement information, the long text outline including a chapter entry. The text fragment generation unit 602 is configured to generate, in response to receiving file data associated with the chapter entry, a text fragment corresponding to the chapter entry based on the file data. The long text generation unit 603 is configured to generate the long text based on the long text outline and the text fragment corresponding to the chapter entry.

In this embodiment, in the apparatus 600 for generating a long text: for particular processes of the outline generation unit 601, the text fragment generation unit 602, and the long text generation unit 603, and their technical effects, reference may be respectively made to relative descriptions of the steps in the corresponding embodiment in Fig. 2 to Fig. 5, detailed description thereof will be omitted.

This embodiment exists as the apparatus embodiment corresponding to the aforementioned method embodiment. The apparatus 600 for generating a long text provided in this embodiment, can not only automatically generate a long text based on the long text requirement information provided by the user, but also allow the user to provide the file data under a chapter entry in the long text outline, and generate a unique and personalized professional long text based on the file data, endowing long text generation with great flexibility, which may meet the user's urgent demand for personalized and customized long text generation, and make the creation of long texts more efficient and convenient.

In some alternative implementations of this embodiment, the text fragment generation unit 602 may include: an outline framework generation subunit, configured to generate an outline framework based on the long text outline and the file data associated with the chapter entry, where the outline framework includes key description information of the chapter entry; and a text fragment generation subunit, configured to generate the text fragment corresponding to the chapter entry based on the file data and the key description information.

In some alternative implementations of this embodiment, the file data includes one or more of the following: text data, image data, table data; and the text fragment generation unit 602 may be further configured to: insert the image data in the file data into the text fragment corresponding to the chapter entry; and/or insert the table data in the file data into the text fragment corresponding to the chapter entry.

In some alternative implementations of this embodiment, the text fragment generation unit 602 may be further configured to: convert data description information that meets chart requirements in the text data into chart data and insert the chart data into the text fragment corresponding to the chapter entry; and/or convert data description information that meets formula requirements in the text data into formula data and insert the formula data into the text fragment corresponding to the chapter entry.

In some alternative implementations of this embodiment, the outline framework generation subunit may be further configured to: input the long text outline and the file data into a large language model guided by few-shot prompting, to generate the outline framework using a preset professional knowledge base.

In some alternative implementations of this embodiment, the text fragment generation subunit may be further configured to: perform information retrieval using the key description information to obtain retrieved information, and generate the text fragment corresponding to the chapter entry based on retrieved information and the file data.

In some alternative implementations of this embodiment, the apparatus 600 for generating long text may further include: a polishing processing unit and/or a format adjustment unit. The polishing processing unit may be configured to polish the long text; and/or the format adjustment unit may be configured to perform format adjustment on the long text.

In some alternative implementations of this embodiment, the polishing processing unit may be further configured to: input the long text into the large language model for polishing.

In some alternative implementations of this embodiment, the text fragment generation unit 602 may be further configured to: generate, based on the file data respectively associated with a plurality of chapter entries, the text fragments respectively corresponding to the plurality of chapter entries, where at least one chapter entry of the chapter entries corresponds to at least two text fragments; the long text generation unit 603 may be further configured to: generate at least two long texts based on the long text outline and the text fragments respectively corresponding to the plurality of chapter entries; and the optimal processing unit may be configured to evaluate the at least two long texts, and output the long text having a highest evaluation score based on evaluation scores of the long texts.

In some alternative implementations of this embodiment, the long text requirement information includes long text topic information and/or a reference file.

In some alternative implementations of this embodiment, the outline generation unit 601 may be further configured to: generate, in response to receiving an outline replacement request, a new long text outline based on the long text requirement information, to update the long text outline.

In some alternative implementations of this embodiment, the long text outline further includes a text title; and the outline generation unit 601 may be further configured to: generate, in response to receiving a text title replacement request, a new text title based on the long text requirement information, to update the text title in the long text outline.

In some alternative implementations of this embodiment, the outline generation unit 601 may be further configured to: input the long text requirement information into a fine-tuned model, to generate the long text outline based on a historically generated outline.

According to an embodiment of the present disclosure, an electronic device is also provided, the electronic device including: at least one processor; and a memory, communicatively connected to the at least one processor; where, the memory stores instructions executable by the at least one processor, and the instructions, when executed by the at least one processor, cause the at least one processor to perform the method for generating a long text as described in any one of the above embodiments.

According to an embodiment of the present disclosure, a readable storage medium storing computer instructions is also provided, where, the computer instructions are used to cause the computer to perform the method for generating long text as described in any one of the above embodiments.

According to an embodiment of the present disclosure, a computer program product including a computer program is provided, where the computer program, when executed by a processor, implements the method for generating a long text as described in any one of the above embodiments.

Fig. 7 shows a schematic block diagram of an example electronic device 700 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 7, the device 700 includes a computation unit 701, which may execute various appropriate actions and processes in accordance with a computer program stored in a read-only memory (ROM) 702 or a computer program loaded into a random access memory (RAM) 703 from a storage unit 708. The RAM 703 also stores various programs and data required by operations of the device 700. The computation unit 701, the ROM 702 and the RAM 703 are connected to each other through a bus 704. An input/output (I/O) interface 705 is also connected to the bus 704.

The following components in the device 700 are connected to the I/O interface 705: an input unit 706, for example, a keyboard and a mouse; an output unit 707, for example, various types of displays and a speaker; a storage unit 708, for example, a magnetic disk and an optical disk; and a communication unit 709, for example, a network card, a modem, a wireless communication transceiver. The communication unit 709 allows the device 700 to exchange information/data with other devices through a computer network such as the Internet and/or various telecommunication networks.

The computation unit 701 may be various general-purpose and/or special-purpose processing assemblies having processing and computing capabilities. Some examples of the computation unit 701 include, but not limited to, a central processing unit (CPU), a graphics processing unit (GPU), various dedicated artificial intelligence (AI) computing chips, various computation units that run a machine learning model algorithm, a digital signal processor (DSP), any appropriate processor, controller and microcontroller, etc. The computation unit 701 performs the various methods and processes described above, for example, the method for generating a long text. For example, in some embodiments, the method for generating a long text may be implemented as a computer software program, which is tangibly included in a machine readable medium, for example, the storage unit 708. In some embodiments, part or all of the computer program may be loaded into and/or installed on the device 700 via the ROM 702 and/or the communication unit 709. When the computer program is loaded into the RAM 703 and executed by the computation unit 701, one or more steps of the above method for generating a long text may be performed. Alternatively, in other embodiments, the computation unit 701 may be configured to perform the method for generating a long text through any other appropriate approach (e.g., by means of firmware).

Various embodiments of the systems and technologies described above herein may be implemented in digital electronic circuit systems, integrated circuit systems, field programmable gate arrays (FPGA), application specific integrated circuits (ASIC), application specific standard products (ASSP), system on chip (SOC), load programmable logic devices (CPLD), computer hardware, firmware, software, and/or combinations thereof. These various embodiments may include being implemented in one or more computer programs that may be executed and/or interpreted on a programmable system including at least one programmable processor, which may be a dedicated or general programmable processor that may receive data and instructions from a storage system, at least one input apparatus, and at least one output apparatus, and transmit data and instructions to the storage system, the at least one input apparatus, and the at least one output apparatus.

The program code for implementing the methods of the present disclosure may be written in any combination of one or more programming languages. These program codes may be provided to the processor or controller of general computer, dedicated computer or other programmable data processing apparatus, so that when executed by the processor or controller, the program code enables the functions/operations specified in the flowchart and/or block diagram to be implemented. The program code may be executed completely on the machine, partially on the machine, partially on the machine and partially on the remote machine as a separate software package, or completely on the remote machine or server.

In the context of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an embodiment of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, also referred to as a cloud computing server or a cloud host, which is a host product in a cloud computing service system, and is designed to address the defects of high management difficulty and weak business scalability existing in traditional physical hosts and virtual private server (VPS) services.

The technical solution provided by embodiments of the present disclosure, by generating the long text outline including chapter entry/entries based on the long text requirement information, in response to receiving the file data associated with a chapter entry, generating a text fragment corresponding to the chapter entry based on the file data, and generating the long text based on the long text outline and the text fragment corresponding to the chapter entry, can not only automatically generate long text based on the long text requirement information provided by the user, but also allow the user to provide the file data under a chapter entry in the long text outline, and generate a unique and personalized professional long text based on the file data, endowing long text generation with great flexibility, which may meet the user's urgent demand for personalized and customized long text generation, and make the creation of long texts more efficient and convenient.

It should be understood that the various forms of processes shown above may be used to reorder, add, or delete steps. For example, the steps described herein may be performed in parallel, sequentially, or in different orders, as long as the desired results of the technical solutions disclosed in the present disclosure can be implemented, which is not limited herein.

The above specific embodiments do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principles of the present disclosure should be encompassed within the scope of protection of the present disclosure.

## Claims

1. A method for generating a long text, the method comprising:
generating a long text outline based on long text requirement information, the long text outline comprising a chapter entry;
generating, in response to receiving file data associated with the chapter entry, a text fragment corresponding to the chapter entry based on the file data; and
generating the long text based on the long text outline and the text fragment corresponding to the chapter entry.

2. The method for generating a long text according to claim 1, wherein the generating a text fragment corresponding to the chapter entry based on the file data, comprises:
generating an outline framework based on the long text outline and the file data associated with the chapter entry, wherein the outline framework comprises key description information of the chapter entry; and
generating the text fragment corresponding to the chapter entry based on the file data and the key description information.

3. The method for generating a long text according to claim 2, wherein the file data comprises one or more of: text data, image data, table data; and
the method further comprises:
inserting the image data in the file data into the text fragment corresponding to the chapter entry; and/or
inserting the table data in the file data into the text fragment corresponding to the chapter entry.

4. The method for generating a long text according to claim 3, wherein the method further comprises:
converting data description information that meets chart requirements in the text data into chart data and inserting the chart data into the text fragment corresponding to the chapter entry; and/or
converting data description information that meets formula requirements in the text data into formula data and inserting the formula data into the text fragment corresponding to the chapter entry.

5. The method for generating a long text according to claim 2, wherein the generating an outline framework based on the long text outline and the file data associated with the chapter entry, comprises:
inputting the long text outline and the file data into a large language model guided by few-shot prompting, to generate the outline framework using a preset professional knowledge base.

6. The method for generating a long text according to claim 2, wherein the generating the text fragment corresponding to the chapter entry based on the file data and the key description information, comprises:
performing information retrieval using the key description information to obtain retrieved information, and generating the text fragment corresponding to the chapter entry based on the retrieved information and the file data.

7. The method for generating a long text according to any one of claims 1-6, wherein the method further comprises:
polishing the long text; and/or
performing format adjustment on the long text.

8. The method for generating a long text according to claim 7, wherein the polishing the long text comprises:
inputting the long text into the large language model for polishing.

9. The method for generating a long text according to any one of claims 1-6, wherein the generating a text fragment corresponding to the chapter entry based on the file data, comprises:
generating, based on file data respectively associated with a plurality of chapter entries, text fragments respectively corresponding to the plurality of chapter entries, wherein at least one chapter entry of the chapter entries corresponds to at least two text fragments;
the generating the long text based on the long text outline and the text fragment corresponding to the chapter entry, comprises:
generating at least two long texts based on the long text outline and the text fragments respectively corresponding to the plurality of chapter entries; and
the method further comprises: evaluating the at least two long texts, and outputting the long text having a highest evaluation score based on evaluation scores of the long texts.

10. The method for generating a long text according to any one of claims 1-6, wherein the long text requirement information comprises long text topic information and/or a reference file.

11. The method for generating a long text according to any one of claims 1-6, wherein the method further comprises:
generating, in response to receiving an outline replacement request, a new long text outline based on the long text requirement information, to update the long text outline.

12. The method for generating a long text according to any one of claims 1-6, wherein the long text outline further comprises a text title; and
the method further comprises:
generating, in response to receiving a text title replacement request, a new text title based on the long text requirement information, to update the text title in the long text outline.

13. The method for generating a long text according to any one of claims 1-6, wherein the generating a long text outline based on long text requirement information, comprises:
inputting the long text requirement information into a fine-tuned model, to generate the long text outline based on a historically generated outline.

14. An apparatus for generating a long text, the apparatus comprising:
an outline generation unit, configured to generate a long text outline based on long text requirement information, the long text outline comprising a chapter entry;
a text fragment generation unit, configured to generate, in response to receiving file data associated with the chapter entry, a text fragment corresponding to the chapter entry based on the file data; and
a long text generation unit, configured to generate the long text based on the long text outline and the text fragment corresponding to the chapter entry.

15. The apparatus for generating a long text according to claim 14, wherein the text fragment generation unit comprises:
an outline framework generation subunit, configured to generate an outline framework based on the long text outline and the file data associated with the chapter entry, wherein the outline framework comprises key description information of the chapter entry; and
a text fragment generation subunit, configured to generate the text fragment corresponding to the chapter entry based on the file data and the key description information.

16. The apparatus for generating a long text according to claim 15, wherein the file data comprises one or more of: text data, image data, table data; and
the text fragment generation unit is further configured to:
insert the image data in the file data into the text fragment corresponding to the chapter entry; and/or
insert the table data in the file data into the text fragment corresponding to the chapter entry.

17. The apparatus for generating a long text according to claim 16, wherein the text fragment generation unit is further configured to:
convert data description information that meets chart requirements in the text data into chart data and insert the chart data into the text fragment corresponding to the chapter entry; and/or
convert data description information that meets formula requirements in the text data into formula data and insert the formula data into the text fragment corresponding to the chapter entry.

18. The apparatus for generating a long text according to claim 15, wherein the outline framework generation subunit is further configured to: input the long text outline and the file data into a large language model guided by few-shot prompting, to generate the outline framework using a preset professional knowledge base.

19. The apparatus for generating a long text according to claim 15, wherein the text fragment generation subunit is further configured to: perform information retrieval using the key description information to obtain retrieved information, and generate the text fragment corresponding to the chapter entry based on the retrieved information and the file data.

20. The apparatus for generating a long text according to any one of claims 14-19, wherein the apparatus further comprises:
a polishing processing unit, configured to polish the long text; and/or
a format adjustment unit, configured to perform format adjustment on the long text.

21. The apparatus for generating a long text according to claim 20, wherein the polishing processing unit is further configured to: input the long text into the large language model for polishing.

22. The apparatus for generating a long text according to any one of claims 14-19, wherein,
the text fragment generation unit is further configured to: generate, based on file data respectively associated with a plurality of chapter entries, text fragments respectively corresponding to the plurality of chapter entries, wherein at least one chapter entry of the chapter entries corresponds to at least two text fragments;
the long text generation unit is further configured to: generate at least two long texts based on the long text outline and the text fragments respectively corresponding to the plurality of chapter entries; and
the apparatus further comprises:
an optimal processing unit, configured to evaluate the at least two long texts, and output the long text having a highest evaluation score based on evaluation scores of the long texts.

23. The apparatus for generating a long text according to any one of claims 14-19, wherein the long text requirement information comprises long text topic information and/or a reference file.

24. The apparatus for generating a long text according to any one of claims 14-19, wherein the outline generation unit is further configured to: generate, in response to receiving an outline replacement request, a new long text outline based on the long text requirement information, to update the long text outline.

25. The apparatus for generating a long text according to any one of claims 14-19, wherein the long text outline further comprises a text title; and
the outline generation unit is further configured to: generate, in response to receiving a text title replacement request, a new text title based on the long text requirement information, to update the text title in the long text outline.

26. The apparatus for generating a long text according to any one of claims 14-19, wherein the outline generation unit is further configured to: input the long text requirement information into a fine-tuned model, to generate the long text outline based on a historically generated outline.

27. An electronic device, comprising:
at least one processor; and
a memory, communicatively connected to the at least one processor; wherein,
the memory stores instructions executable by the at least one processor, and the instructions, when executed by the at least one processor, cause the at least one processor to perform the method for generating a long text according to any one of claims 1-13.

28. A non-transitory computer readable storage medium storing computer instructions, wherein, the computer instructions are used to cause the computer to perform the method for generating a long text according to any one of claims 1-13.

29. A computer program product, comprising a computer program, wherein the computer program, when executed by a processor, implements steps of the method for generating a long text according to any one of claims 1-13.
